(19) Europäisches Patentamt / European Patent Office / Office européen des brevets

(11) **EP 3 520 023 B1**

(12) **EUROPÄISCHE PATENTSCHRIFT**

(45) Veröffentlichungstag und Bekanntmachung des Hinweises auf die Patenterteilung:
**18.09.2024 Patentblatt 2024/38**

(21) Anmeldenummer: **17790952.0**

(22) Anmeldetag: **28.09.2017**

(51) Internationale Patentklassifikation (IPC):
**G06V 20/58** *(2022.01)*

(52) Gemeinsame Patentklassifikation (CPC):
**G06V 20/58**

(86) Internationale Anmeldenummer:
**PCT/DE2017/200101**

(87) Internationale Veröffentlichungsnummer:
**WO 2018/059630 (05.04.2018 Gazette 2018/14)**

(54) **DETEKTION UND VALIDIERUNG VON OBJEKTEN AUS SEQUENTIELLEN BILDERN EINER KAMERA**

DETECTION AND VALIDATION OF OBJECTS FROM SEQUENTIAL IMAGES OF A CAMERA

DÉTECTION ET VALIDATION D'OBJETS PROVENANT D'IMAGES SÉQUENTIELLES D'UNE CAMÉRA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2016 DE 102016218853**

(43) Veröffentlichungstag der Anmeldung:
**07.08.2019 Patentblatt 2019/32**

(73) Patentinhaber: **Continental Autonomous Mobility Germany GmbH**
**85057 Ingolstadt (DE)**

(72) Erfinder: **WALTER, Michael**
**9435 Heerbrugg (CH)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**US-A1- 2014 161 323   US-A1- 2015 086 080**
**US-A1- 2015 332 114   US-B1- 6 445 809**
**US-B1- 7 046 822**

- **M.I.A. LOURAKIS ET AL: "Detecting Planes In An Uncalibrated Image Pair", PROCEEDINGS OF THE 13TH BRITISH MACHINE VISION CONFERENCE : 2ND - 5TH SEPTEMBER 2002, CARDIFF UNIVERSITY, 1 January 2002 (2002-01-01), Cardiff, pages 57.1 - 57.10, XP055439691, ISBN: 978-1-901725-19-3, DOI: 10.5244/C.16.57**
- **OKUTOMI M ET AL: "Robust estimation of planar regions for visual navigation using sequential stereo images", PROCEEDINGS / 2002 IEEE INTERNATIONAL CONFERENCE ON ROBOTICS AND AUTOMATION : MAY 11 - 15, 2002, WASHINGTON, D.C, IEEE SERVICE CENTER, PISCATAWAY, NJ, vol. 4, 11 May 2002 (2002-05-11), pages 3321, XP032882657, ISBN: 978-0-7803-7272-6, DOI: 10.1109/ROBOT.2002.1014224**

**EP 3 520 023 B1**

**Beschreibung**

Die Erfindung betrifft ein Verfahren zur Detektion und Validierung von Objekten aus Bildern einer Kamera und kann insbesondere bei kamerabasierten Fahrerassistenzsystemen verwendet werden.

Fahrzeugerkennungssysteme nach dem aktuellen Stand der Technik sind meist klassifikationsbasiert. Klassifikationsbasierte Systeme sind gut geeignet Muster zu erkennen, die sie in Ihren Trainingsdaten gesehen haben. Es ist allerdings auch erforderlich Objekte detektieren und klassifizieren zu können, die von den Trainingsdaten leicht abweichen. Ein bekanntes Problem ist eine Fehldetektion und -klassifikation aufgrund von Bildbestandteilen, die einem Fahrzeug ähnlich sind. Diese können zu unnötigen Warnungen oder gar Eingriffen in die Fahrzeugsteuerung durch ein Fahrerassistenzsystem führen.

US 8098889 B2 zeigt ein fortschrittliches Verfahren zur Fahrzeugdetektion und zum Fahrzeugtracking au seiner Folge von Kamerabildern, bei dem Einzelbilder mit einem Satz von einem oder mehreren Fahrzeugklassifikatoren verglichen werden, um Fahrzeughypothesen zu bilden.

US 2014/0161323 A1 zeigt ein Verfahren zur Erzeugung dichter dreidimensionaler Strukturen in einer Straßenumgebung aus Bildern, die mit einer Monokamera aufgenommen werden.

EP 2 993 654 A1 zeigt ein Verfahren zur Frontkollisionswarnung (FCW) aus Kamerabildern. Hierbei wird ein Bildausschnitt analysiert, wohin das eigene Fahrzeug in einem vorgegebenen Zeitintervall gelangen wird. Sofern dort ein Objekt erkannt wird, wird eine Kollisionswarnung ausgegeben.

US 7046822 B1 zeigt ein Verfahren zur Detektion von Objekten im Umfeld eines Straßenfahrzeugs bis in große Entfernung, bei welchem die Entfernung eines bewegten oder stehenden Fahrzeugs zu einem oder mehreren Objekten durch Auswertung von Stereobildpaaren berechnet und Eigenschaften der detektierten Objekte ermittelt werden. Eine entfernungsbasierte Bildsegmentierung wird mittels Stereobildverarbeitung und eine Objekterkennung wird in den segmentierten Bildbereichen durchgeführt.

US 2015/0332114 A1 zeigt Systeme und Verfahren zur Detektion einer Bordsteinkante und zur Gefährdungsbeurteilung für Fußgänger. Mindestens eine Kamera erfasst eine Mehrzahl von Bildern eines Bereichs vor einem Fahrzeug. Eine Bildverarbeitungsvorrichtung empfängt die Bilder und bestimmt eine Mehrzahl von Bordsteinkanten-Kandidaten. Ein Beispiel zur Validierung der tatsächlichen Bordsteinkante aus den Kandidaten schlägt eine Bestimmung der Höhe des Bordsteins vor, wobei eine Bildwarpfunktion mit drei Homographien verwendet wird. Die erste Homographie entspricht der Fahrbahnebene, die zweite der Ebene zwischen der unteren und der oberen Kante des Bordsteins und die dritte der Ebene der Bürgersteigebene. Zur Berechnung der Bordsteinhöhe ist die Kenntnis der Kameraeinbaulage und der Kameraeigenbewegung erforderlich.

US 2015/086080 A1 zeigt ein Fahrerassistenzsystem mit einer Kamera und einer Erkennung einer vertikalen Abweichung in der Fahrbahnkontur während der Fahrt. Erste, zweite und dritte Bilder der Fahrbahn werden mit der Kamera erfasst. Indem Bildpunkte der Fahrbahn im ersten Bild mit korrespondierenden Bildpunkten der Fahrbahn im zweiten Bild gematcht werden, wird eine erste Homographie berechnet, die das erste Bild der Fahrbahn in das zweite Bild umwandelt. Eine zweite Homographie wird berechnet, die das zweite Bild der Fahrbahn in das dritte Bild der Fahrbahn umwandelt. Eine verkettete Homographie wird berechnet durch eine Verkettung von erster und zweiter Homographie. Die verkettete Homographie wird als Initialschätzung verwendet, um eine dritte Homographie zu berechnen, die das erste Bild der Fahrbahn in das dritte Bild der Fahrbahn umwandelt.

M.I.A. Lourakis et al. zeigen in Detecting Planes In An Uncalibrated Image Pair, Proceedings of the 13th British Machine Vision Conference, 2th-5th September 2002, Cardiff University, Seiten 57.1-57.10, XP055439691, Cardiff, DOI: 10.5244/C. 16.57 ISBN 978-1-901725-19-3, ein Verfahren zur Detektion von Ebenen anhand von zwei Bildern, wobei Ergebnisse aus der projektiven Geometrie verwendet werden.

Es ist eine Aufgabe der vorliegenden Erfindung, ein Verfahren zur Detektion und Validierung von Objekten aus Bildern einer Kamera anzugeben.

Ein Ausgangspunkt der Erfindung sind die folgenden Überlegungen:

Da bei einer bildbasierten Klassifikation von Objekten bzw. Fahrzeugen meist nur lokale Umgebungen betrachtet werden, kann es durch Strukturen auf der Fahrbahn sehr leicht zu einer Fehlklassifikation kommen.

Daher ist eine robuste Validierung eines vermeintlich erkannten Objekts erforderlich, um unnötige oder gar gefährliche Fahrerassistenzmaßnahmen zu verhindern oder zumindest zu reduzieren.

Analysiert man die zeitliche Veränderung einer Detektion, so kann man über die Deformation eines Patches (Bildausschnitts) erkennen, ob es sich um eine Struktur auf der Straße oder ein erhabenes Objekt handelt.

Ein erfindungsgemäßes Verfahren zur Detektion von Objekten aus einer Folge von Bildern einer Fahrzeugkamera ist Gegenstand des Anspruchs 1. Das Verfahren umfasst die Schritte:

a) Aufnahme einer Folge von Bildern mit der Fahrzeugkamera,
b) Detektion eines potentiellen Kollisionsobjekts in mindestens einem Bild,
c) Ermittlung von korrespondierenden Merkmalen in zwei aufeinander folgenden Bildern im Bereich des detektierten potentiellen Kollisionsobjekts (im Bild),

d) Berechnung von Homographien für die ermittelten korrespondierenden Merkmale zur Zuordnung dieser korrespondierenden Merkmale zu einer Ebene im Raum,

e) Zuordnung der ermittelten korrespondierender Merkmale zu einer Ebene im Raum,

f) Zuordnung zu der Ebene im Raum, die für die ermittelten korrespondierenden Merkmale den kleinsten Rückprojektionsfehler ergibt, wobei der Rückprojektionsfehler den Unterschied an zwischen der gemessenen Korrespondenz eines Merkmals in zwei aufeinanderfolgenden Bildern und dem aus der berechneten Homographie prädizierten Korrespondenz des Merkmals angibt, und

g) Validierung eines Objekts, falls die zugeordnete Ebene einem erhabenen Objekt entspricht.

Bevorzugt ist die Fahrzeugkamera zur Aufnahme einer Umgebung eines Fahrzeugs ausgebildet. Bei der Umgebung handelt es sich insbesondere um die vor dem Fahrzeug liegende Umgebung. Vorzugsweise ist die Fahrzeugkamera in eine Fahrerassistenzvorrichtung integrierbar oder mit dieser verbindbar, wobei die Fahrerassistenzvorrichtung insbesondere zur Objekterkennung aus den von der Fahrzeugkameravorrichtung bereitgestellten Bilddaten ausgebildet ist. Bevorzugt ist die Fahrzeugkameravorrichtung eine im Innenraum des Kraftfahrzeugs hinter der Windschutzscheibe anzuordnende und in Fahrtrichtung gerichtete Kamera. Erfindungsgemäß ist die Fahrzeugkamera eine monokulare Kamera.

Bevorzugt werden mit der Fahrzeugkamera zu bestimmten bzw. bekannten Zeitpunkten Einzelbilder aufgenommen, woraus sich eine Folge von Bildern ergibt.

Die Detektion eines potentiellen Kollisionsobjekts in mindestens einem Bild der Bilderfolge in Schritt b) erfolgt insbesondere anhand von 2D-Eigenschaften, z.B. als bildbasierte Objektklassifikation. Ein Vergleich des Bildinhalts mit Vorlagen (Templates) kann hierbei unmittelbar durchgeführt werden oder mittels eines zuvor trainierten Klassifikators. Eine Kantenerkennung, Grau-/Farbwertanalyse von Pixeln und/oder andere dem Fachmann an sich bekannte Verfahren zur Objekterkennung und -klassifikation können eingesetzt werden, um eine Objekthypothese zu generieren bzw. ein potentielles Kollisionsobjekt im Bild zu detektieren.

Als Korrespondenz wird die Entsprechung eines Merkmals in einem ersten Bild zu demselben Merkmal in einem zweiten Bild bezeichnet. Korrespondierende Merkmale in zwei Bildern können auch als Flussvektor beschrieben werden, der angibt wie sich das Merkmal im Bild verschoben hat. Ein Merkmal kann insbesondere ein Bildausschnitt (bzw. Patch), ein Pixel, eine Kante oder eine Ecke sein. Die zwei aufeinander folgenden Bilder (Schritt c)) können z.B. als erstes Bild das Bild, in dem das Objekt detektiert wurde, und als zweites Bild das nachfolgend aufgenommene Bild sein. Dann werden die korrespondierenden Merkmale im Bereich des detektierten Objekts im ersten Bild und dem entsprechenden Bereich des zweiten Bildes ermittelt. Die zwei aufeinander folgenden Bilder können auch die auf das Bild, in dem das Objekt detektiert wurde, folgenden Bilder sein.

Der Begriff "Ebene" beschreibt im Kontext der vorliegenden Erfindung folgende Zusammenhänge: einerseits ein Kriterium zur Akkumulation (benachbarter) korrespondierender Merkmale. D.h. diese werden als zusammengehörig angesehen, wenn sie in einer gemeinsamen Ebene im Raum liegen und sich entsprechend der Bewegung der Ebene zeitlich entwickeln.

Derart akkumulierte korrespondierende Merkmale werden anschließend als z.B. "Bodenebene" bezeichnet, da sie alle in der Ebene liegen, die der Fahrbahnebene entspricht. Jedoch erstreckt sich eine solche Bodenebene nicht ins Unendliche, sondern meint einen Teilbereich der Ebene, nämlich den, in dem tatsächlich korrespondierende Merkmale angeordnet sind.

Falls die (den korrespondierenden Merkmalen im Bereich des detektierten potentiellen Kollisionsobjekts mehrheitlich) zugeordnete Ebene einem erhabenen Objekt entspricht, wird das Objekt in Schritt g) validiert. Damit ist insbesondere gemeint, dass es als potentielles Kollisionsobjekt validiert wird. Potentielle Kollisionsobjekte können z.B. andere Fahrzeuge, Verkehrsteilnehmer, Gegenstände oder ähnliches sein. Potentiell meint vorzugsweise, dass eine Kollision vermieden werden sollte. Ob es zu einer Kollision kommt, hängt von der Fahrzeugeigenbewegung und zukünftiger -trajektorie ab sowie von der Bewegung des potentiellen Kollisionsobjekts. Angewandt werden können detektierte und validierte Objekte somit z.B. im Rahmen einer Forward Collision Warning (Frontkollisionswarnung), eines Advanced Emergency Brake (und/oder Steering) Assist (also eines fortschrittlichen Notbrems-/Notlenk-Assistenzsystems) oder anderen Fahrerassistenzfunktionen.

Durch die von der Objektdetektion unabhängige Validierung können Fehlwarnungen oder fehlerhafte Eingriffe in die Fahrzeugdynamik minimiert werden.

Eine Homographie beschreibt die Korrespondenz von Punkten auf einer Ebene zwischen zwei Kamerapositionen bzw. die Korrespondenz zweier Punkte in zwei aufeinanderfolgenden Bildern der Fahrzeugkamera. Durch die Berechnung von Homographien für (benachbarte) korrespondierende Merkmale kann so die Zuordnung von korrespondierenden Merkmalen in einem Bildbereich zu jeweils einer Ebene im Raum erfolgen.

Erfindungsgemäß umfasst das Verfahren den Schritt:

e2) Zuordnung der ermittelten korrespondierenden Merkmale zu einer von einer Mehrzahl von Ebenen vorgegebener Orientierung im Raum.

Ein erfindungsgemäßes Verfahren umfasst den Schritt Zuordnung der ermittelten korrespondierenden Merkmale zu einer Bodenebene, einer Rückwandebene oder einer Seitenwandebene. Im erfindungsgemäßen Falle eines Koordinatensystems, bei dem die x-Richtung horizontal bzw. lateral, die y-Richtung vertikal und die z-Richtung in Fahrzeuglängsrichtung verläuft, wird eine Bodenebene normal zur y-Richtung, eine Rückwandebene normal zur z-Richtung und eine Seitenwandebene normal zur x-Richtung vorgegeben.

Durch eine Berechnung von Homographien einer Bodenebene, einer Rückwandebene und einer Seitenwandebene kann für die ermittelten korrespondierenden Merkmale eine Zuordnung zu einer dieser Ebenen erfolgen.

Die Validierung von potentiellen Kollisionsobjekten (erhabenen Objekten) wird dann für den fraglichen Bildbereich vorgenommen, falls die Rückprojektionsfehler der Rückwandebenen- und der Seitenwandebenen-Homographie geringer sind als der Fehler der Bodenebenen-Homographie.

Bevorzugt können die Homographien für die Rückwandebene nach Gleichung (10) bzw. für die Bodenebene nach Gleichung (9) bzw. für die Seitenwandebene nach Gleichung (11) berechnet werden. Hierbei sind a, b, c Konstanten, x0, y0, x1, y1 bezeichnen Korrespondenzen im ersten Bild (0), aufgenommen zu einem Zeitpunkt t-0, und zweiten Bild (1), aufgenommen zu einem früheren Zeitpunkt t-1, und tx, ty, tz sind die Komponenten des Vektors t/d. t beschreibt die Translation der Fahrzeugkamera und d die Entfernung zu einer Ebene (senkrecht zu dieser Ebene), also entlang des Normalenvektors dieser Ebene. Die Komponenten tx, ty bzw. tz werden im Folgenden auch als "inverse TTC" bezeichnet. TTC kommt von Time to collision und ergibt sich in einer Raumrichtung als Abstand geteilt durch Translationsgeschwindigkeit.

Gemäß einer vorteilhaften Weiterbildung kann ein detektiertes Objekt im Verlauf der Bilderfolge bildbasiert getrackt (nachverfolgt) werden.

Bevorzugt kann das detektierte Objekt unter Verwendung einer Bounding Box (Begrenzungsrechtecks), die z.B. der abgebildeten Front/Rückseite des Objekts entspricht, getrackt werden. Die Bounding Box sollte bevorzugt nicht zu groß gewählt werden, damit sie von der abgebildeten Front/Rückseite des Objekts möglichst vollständig ausgefüllt ist. Befindet sich auch Hintergrund in der Bounding Box, kann die zu Korrespondenzen führen, die sich nicht wie die Objektfront-/rückseite in den folgenden Bildern bewegen.

Vorteilhaft kann die Bounding Box eines vorausgegangenen Bildes mittels einer Homographie für eine Rückwandebene (back plane) auf das aktuelle Bild prädiziert werden.

Gegenstand der Erfindung ist weiterhin eine Vorrichtung zur Detektion von Objekten aus einer Folge von Bildern einer Fahrzeugkamera mit den Merkmalen des Anspruchs 11. Die Vorrichtung umfasst ein Kamerasteuergerät und eine Auswerteelektronik,

wobei das Kamerasteuergerät dazu konfiguriert bzw. ausgebildet ist,

a) eine Folge von Bildern mit der Fahrzeugkamera aufzunehmen; und wobei die Auswerteelektronik dazu konfiguriert/ausgebildet ist,

b) ein potentielles Kollisionsobjekt in mindestens einem Bild zu detektieren,

c) korrespondierende Merkmale in zwei aufeinander folgenden Bildern im Bereich des detektierten potentiellen Kollisionsobjekts (im Bild) zu ermitteln,

d) Homographien für die ermittelten korrespondierenden Merkmale zur Zuordnung dieser korrespondierenden Merkmale zu einer Ebene im Raum zu berechnen,

e) die ermittelten korrespondierenden Merkmale zu einer Ebene im Raum zuzuordnen,

f) zu einer Ebene im Raum zuzuordnen, die für die ermittelten korrespondierenden Merkmale den kleinsten Rückprojektionsfehler ergibt, wobei der Rückprojektionsfehler den Unterschied an zwischen der gemessenen Korrespondenz eines Merkmals in zwei aufeinanderfolgenden Bildern und dem aus der berechneten Homographie prädizierten Korrespondenz des Merkmals angibt, und

g) ein Objekt als potentielles Kollisionsobjekt zu validieren, falls die Ebene, der die Mehrzahl ermittelter korrespondierender Merkmale zugeordnet worden ist, einer Rückwand- oder einer Seitenwandebene entspricht, und die Rückprojektionsfehler der Rückwandebenen- und Seitenwandebenen-Homographie geringer sind als der Fehler der Bodenebenen-Homographie, was anzeigt, dass das validierte potentielle Kollisionsobjekt einem erhabenen Objekt entspricht.

Das Kamerasteuergerät bzw. die Auswertungselektronik können insbesondere einen Mikrocontroller oder -prozessor, einen Digital Signal Processor (DSP), einen ASIC (Application Specific Integrated Circuit), einen FPGA (Field Programmable Gate Array) und dergleichen mehr sowie Software zur Durchführung der entsprechenden Steuerungs- bzw. Auswertungsschritte umfassen. Die vorliegende Erfindung kann somit in digitalen elektronischen Schaltkreisen, Computer-Hardware, Firmware oder Software implementiert sein.

Weitere Merkmale, Vorteile und Wirkungen der Erfindung ergeben sich aus der nachfolgenden Beschreibung bevorzugter Ausführungsbeispiele der Erfindung. Dabei zeigen:

Fig. 1    schematisch eine typische Deformation einer sich nähernden Rückwandebene;

Fig. 2    schematisch eine typische Deformation einer sich nähernden Bodenebene;

Fig. 3    schematisch eine typische Deformation a) einer sich schnell und b) einer sich langsam nähernden oder weiter entfernten Rückwandebene;

Fig. 4    schematisch eine Unterteilung eines Bildes mit zwei unterschiedlichen Segmenten in Zellen;

Fig. 5    Segmentierungsergebnisse nach einem dritten Iterationsschritt;

Fig. 6    Ebenen-Orientation zur Validierung von potentiellen Kollisionsobjekten;

Fig. 7    Time to Collision-Betrachtung; und

Fig. 8    eine Fahrsituation, die zu einer Fehlerkennung führen kann.

Einander entsprechende Teile sind in der Regel in allen Figuren mit denselben Bezugszeichen versehen.

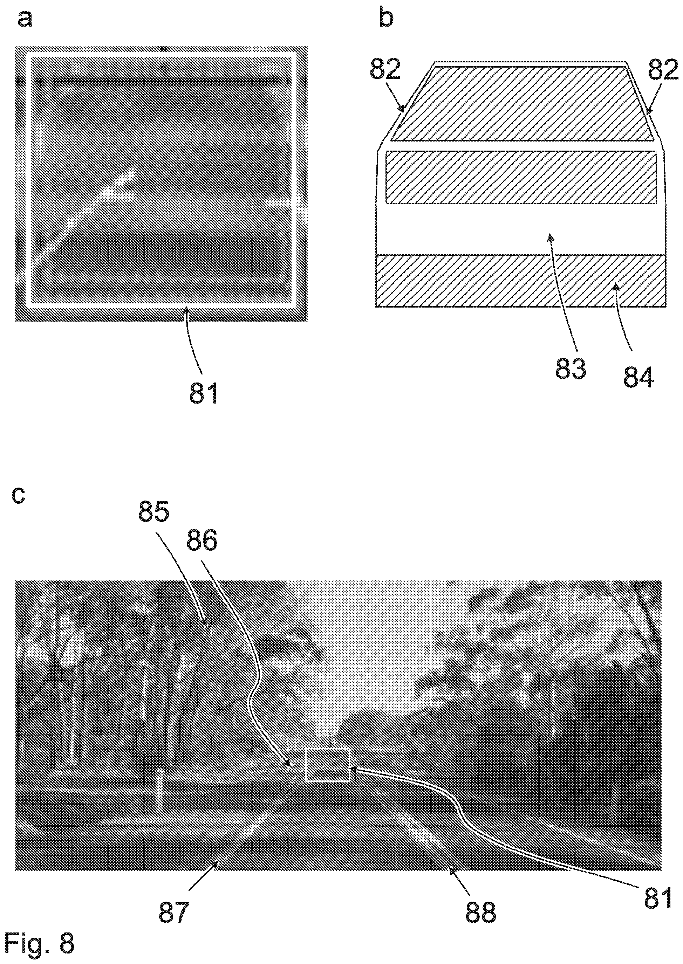

Eine Situation, die zu einer fehlerhaften Fahrzeugdetektion führen kann, ist in Fig. 8 gezeigt. Es herrscht Linksverkehr. Die lokale Detektion anhand eines Ausschnitts eines Bildes der Fahrzeugkamera in Fig. 8a zeigt typische Fahrzeugfeature, wie z.B. der Schatten unter der Stoßstange, die Fahrzeugseiten und C-Säulen sind zu erkennen.

Der Klassifikator erkennt daher eine relativ große Ähnlichkeit zu einer Rückansicht eines weißen/hellen Fahrzeugs, wie sie schematisch in Fig. 8b dargestellt ist. Die C-Säule (82), der Bereich der Stoßstange (83) und ein dunkler Bereich (84) unterhalb der Stoßstange sind für eine solche Rückansicht charakteristisch.

Dagegen erkennt ein menschlicher Betrachter beim Anblick des Kamerabildes der gesamten Szene in Fig. 8c sofort, dass die Strukturen im Bildausschnitt der Fig. 8a nur durch den Schattenwurf (86) der Bäume (85) am Fahrbahnrand gebildet werden. Ein herkömmliches klassifikationsbasiertes Fahrzeugerkennungssystem würde aber in einem solchen Fall eine Kollisionswarnung an den Fahrer des eigenen Fahrzeugs abgeben oder sogar eine automatische Notbremsung einleiten, da sich das scheinbar erkannte Fahrzeug innerhalb der eigenen Spur bzw. innerhalb des eigenen Fahrkorridors (87, 88) befindet.

Dieses Problem kann durch eine Fusion von Kameradaten mit einem Strahlsensor (Radar/Lidar) vermieden werden. Hierzu ist jedoch ein zusätzlicher Strahlsensor erforderlich. Diese Sensoren sind teuer und in absehbarer Zeit nicht flächendeckend in Fahrzeugen verfügbar.

Im Folgenden werden Lösungen vorgestellt, die nur unter Verwendung einer Monokamera mittels einer robusten Validierung von detektierten Objekten derartige Fehlfunktionen verhindern.

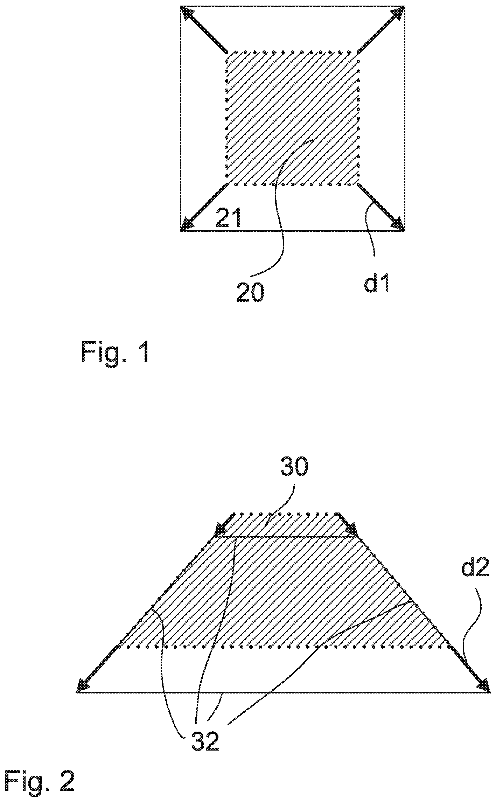

In Fig. 1 ist schematisch eine Rückwandebene (back plane) dargestellt, die zu einem ersten Zeitpunkt t-1 den schraffiert dargestellten Bereich (20, gepunktete Linie) einnimmt. Zu einem darauf folgenden Zeitpunkt t hat sich der Abstand zwischen der Fahrzeugkamera und der Rückwandebene verringert, was zu der durch die Pfeile (d1) angedeuteten Deformation des Bereichs (21, durchgezogene Linie) der Rückwandebene im Bild führt. Der Bereich (20; 21) skaliert bzw. vergrößert sich infolge der Relativbewegung von der Fahrzeugkamera zu der Rückwandebene.

In Fig. 2 ist schematisch eine Bodenebene (ground plane) dargestellt, die zu einem ersten Zeitpunkt t-1 den schraffiert dargestellten Bereich (30, gepunktete Linie) einnimmt. Dies könnte ein Abschnitt einer Fahrbahnoberfläche sein, auf der das Fahrzeug fährt. Infolge der Eigenbewegung der Fahrzeugkamera ändert sich der Bereich (im Bild) zu einem darauf folgenden Zeitpunkt t, was zu der durch die Pfeile (d2) skizzierten Deformation des Bereichs (32) der Bodenebene führt. Zum Zeitpunkt t begrenzen die mit 32 bezeichneten Linien den Bereich der Bodenebene. Unter der "Bodenebene" wird hier also ein abgegrenzter Bereich auf der Fahrbahnoberfläche verstanden. Der Randbereich ergibt sich z.B. aus Signaturen (bzw. Randpunkten) auf der Fahrbahnoberfläche, die in der Bilderfolge getrackt werden können.

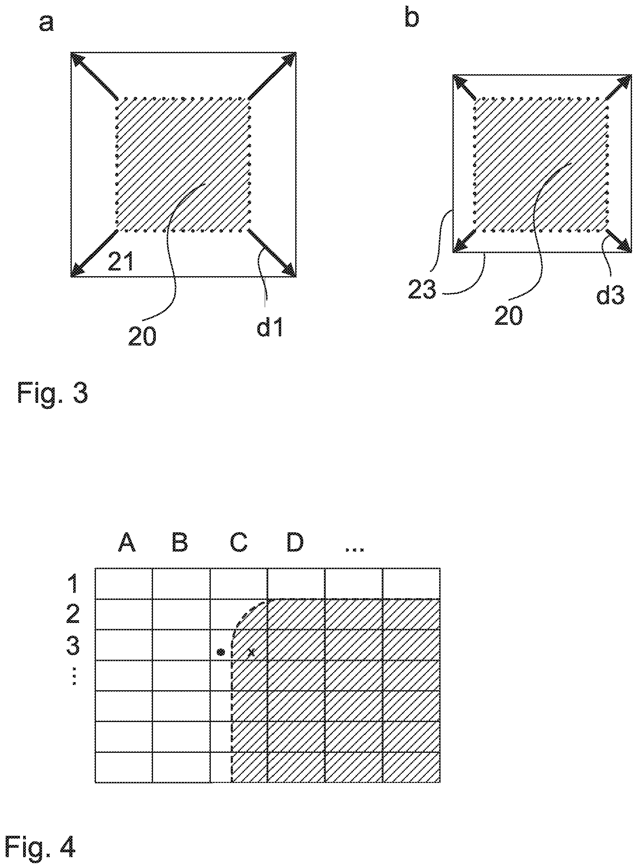

Fig. 3 veranschaulicht den Unterschied zwischen einer sich schnell (Fig. 3a: 20, 21; Deformation d1) und einer sich langsam (Fig. 3b) nähernden Rückwandebene (20, 23; Deformation d3), falls zum Zeitpunkt t-1 die Rückwandebene (20) in Fig. 3a denselben Abstand zur Fahrzeugkamera aufweist wie die Rückwandebene (20) in Fig. 3b.

Alternativ könnte Fig. 3 den Unterschied zwischen einer nahen Rückwandebene (Fig. 3a: 20, 21; Deformation d1) und einer weiter entfernten Rückwandebene (20, 23; Deformation d3) darstellen, die sich z.B. mit derselben (Relativ-) Geschwindigkeit bewegen, dann wäre das in Fig. 3b dargestellte Objekt (20, 21) im realen Raum größer als das in Fig. 3a dargestellte Objekt (20, 23).

Werden anstelle einzelner Korrespondenzen, mehrere benachbarte Korrespondenzen betrachtet, lassen sich Objekte aufgrund unterschiedlicher Geschwindigkeiten, Skalierungen und Deformation segmentieren.

Geht man davon aus, dass die Welt aus Ebenen besteht, kann man diese durch Homographien beschreiben und wie im Folgenden gezeigt wird über Ihre Distanz, Geschwindigkeit und Orientierung trennen.

Eine Homographie beschreibt die Korrespondenz von Punkten auf einer Ebene zwischen zwei Kamerapositionen bzw. die Korrespondenz zweier Punkte in zwei aufeinanderfolgenden Frames:

$$x_{t0} = H * x_{t1} \;\; \texttt{mit} \;\; x_{t0} = \begin{bmatrix} x_0 \\ y_0 \\ 1 \end{bmatrix}, \;\; x_{t1} = \begin{bmatrix} x_1 \\ y_1 \\ 1 \end{bmatrix}. \qquad (1)$$

Hierbei beschreibt der Vektor $x_{t0}$ die 3D-Korrespondenz zum Zeitpunkt t-0 des Vektors $x_{t1}$ zum Zeitpunkt t-1. Eine Homographie kann bildbasiert durch Kenntnis von vier Punkt-Korrespondenzen berechnet werden (vgl. Tutorial: Multiple View Geometry, Hartley, R. and Zisserman, A., CVPR June 1999: https://de.scribd.com/document/96810936/Hartley-Tut-4up abgerufen am 26.09.2016). Die auf Seite 6 des Tutorials links oben (Folie 21) angegebenen Zusammenhänge lassen sich in der Notation von Gleichung 1 wie folgt formulieren:

$$\begin{bmatrix} -x_0 & -y_0 & -1 & 0 & 0 & 0 & x_1 x_0 & x_1 y_0 & x_1 \\ 0 & 0 & 0 & -x_0 & -y_0 & -1 & y_1 x_0 & y_1 y_0 & y_1 \\ & & & & \vdots \end{bmatrix} * \begin{bmatrix} h_1 \\ h_2 \\ h_3 \\ h_4 \\ h_5 \\ h_6 \\ h_7 \\ h_8 \\ h_9 \end{bmatrix} = 0 \qquad (2)$$

$$H = \begin{bmatrix} h_1 & h_2 & h_3 \\ h_4 & h_5 & h_6 \\ h_7 & h_8 & h_9 \end{bmatrix}$$

mit .

Alternativ kann bei Kenntnis der Kameratranslation t, der Rotation R und der Entfernung d entlang des Normalen Vektors n der Ebene die Homographie nach Gleichung 3 berechnet werden. Gleichung 3 verdeutlicht, dass sich bei einer inversen TTC $t/d$ ungleich Null, Ebenen mit unterschiedlichen Orientierung n modellieren lassen und dass sich Ebnen mit identischer Orientierung n über ihre inverse TTC trennen lassen.

$$H = [R - \frac{t*n\prime}{d}] \qquad (3)$$

Eine Homographie lässt sich theoretisch in den Normalenvektor n, die Rotationsmatrix R und die inverse TTC $t/d$ zerlegen. Leider ist diese Zerlegung numerisch äußerst instabil und empfindlich auf Messfehler.

Beschreibt man eine Szene durch Ebenen, lässt sie sich wie im Folgenden angegeben segmentieren.

Fig. 4 zeigt schematisch eine Unterteilung in Zellen (Grid, Gitter/-linien). Die Szene wird in NxM initiale Zellen unterteilt und jeder Punkt-Korrespondenz wird eine eindeutige ID zugewiesen. Diese ID gibt zunächst die Zugehörigkeit zu einer Zelle an. Im weiteren Verlauf kann die ID die Zugehörigkeit zu einem Cluster oder einem Objekt angeben.

Schraffiert ist ein Objekt (insb. eine Rückwandebene) im Vordergrund dargestellt. Der Hintergrund ist weiß dargestellt. Beinhaltet eine Zelle nur ein Objekt (Zellen B3, D3) wird eine Homographie diese Zelle sehr gut beschreiben. Beinhaltet eine Zelle jedoch mehr als ein Objekt (Zelle C3), wird die Homographie keines der beiden Objekte gut beschreiben. Werden die Punkt-Korrespondenzen (schwarzer Punkt bzw. schwarzes Kreuz bzw. x) den Clustern (bzw. Segment) der benachbarten Zellen (B3 bzw. D3) über Ihre Rückprojektionsfehler zugeordnet, wird der schwarze Punkt dem Segment der Zelle B3 und das schwarze Kreuz dem Segment der Zelle D3 zugeordnet, da die Homographie für die Zelle C3 weder den Vordergrund noch den Hintergrund gut beschreibt.

Ist Vorwissen über eine Szene vorhanden, lassen sich die Segmentgrößen an die Szene anpassen, indem z.B. größere Bereiche im Nahbereich des Fahrzeuges oder in Bereichen mit positiver Klassifikations-Antwort generiert werden. Für jedes Segment wird, wie in den Gleichungen 5 bis 10 gezeigt wird, eine dedizierte Back-/Ground- und Side-Plane-Homographie berechnet.

Die Berechnung der Back-/Ground- und Side-Plane-Homographie, erhöht die Trennschärfe, da eine Homographie mit weniger Freiheitsgraden Bereiche, die unterschiedliche Ebenen beinhalten, nur schlecht modellieren kann und somit korrespondierende Punkte einen höheren Rückprojektionsfehler aufweisen werden, siehe Fig. 4. Der Rückprojektionsfehler $e_i$ ist also ein Maß dafür, wie gut ein Punkt x zum Zeitpunkt t-0 durch die Homographie einer Ebene i des korrespondierenden Punktes zum Zeitpunkt t-1 beschrieben wird:

$$e_i = x_{t0} - H_i x_{t1} \, . \qquad (4)$$

Setzt man die statische Einbaulage der Kamera und Kamera Rotation in zwei unterschiedlichen Ansichten als gegeben voraus (z.B. durch Kenntnis der Kamera Kalibration und durch die Berechnung der Fundamental-Matrix in einem monokularen System oder durch Rotationswerte eines Drehratensensor-Clusters), lässt die inverse TTC $t/d$ mittels der um die statische Kamera-Rotation kompensierten Flussvektoren berechnen, wie im Folgenden exemplarisch für eine Ground Plane $n' = [010]$ gezeigt wird. Ist die Rotation nicht bekannt, kann sie näherungsweise durch eine Einheitsmatrix ersetzt werden.

Ersetzt man den Quotienten $t/d$ in Gleichung 3 durch die inverse Time to Collision $\begin{bmatrix} t_x \\ t_y \\ t_z \end{bmatrix}$ folgt:

$$\begin{bmatrix} x_0 \\ y_0 \\ 1 \end{bmatrix} = \begin{bmatrix} R - \begin{matrix} 0 & t_x & 0 \\ 0 & t_y & 0 \\ 0 & t_z & 0 \end{matrix} \end{bmatrix} \begin{bmatrix} x_1 \\ y_1 \\ 1 \end{bmatrix} \Rightarrow \begin{bmatrix} x_0 \\ y_0 \\ 1 \end{bmatrix} - R \begin{bmatrix} x_1 \\ y_1 \\ 1 \end{bmatrix} = - \begin{bmatrix} 0 & t_x & 0 \\ 0 & t_y & 0 \\ 0 & t_z & 0 \end{bmatrix} \begin{bmatrix} x_1 \\ y_1 \\ 1 \end{bmatrix} . \qquad (5)$$

Durch Einführung der Konstanten a, b, c, wobei $\begin{bmatrix} a \\ b \\ c \end{bmatrix} := R \begin{bmatrix} x_1 \\ y_1 \\ 1 \end{bmatrix}$ ist, ergibt Gleichung 5 die vereinfachte Form:

$$\begin{bmatrix} x_0 \\ y_0 \\ 1 \end{bmatrix} - \begin{bmatrix} a \\ b \\ c \end{bmatrix} = - \begin{bmatrix} t_x y_1 \\ t_y y_1 \\ t_z y_1 \end{bmatrix} \Rightarrow \begin{bmatrix} x_0 \\ y_0 \\ 1 \end{bmatrix} = \begin{bmatrix} a \\ b \\ c \end{bmatrix} - \begin{bmatrix} t_x y_1 \\ t_y y_1 \\ t_z y_1 \end{bmatrix} . \qquad (6)$$

Durch Normierung der homogenen Koordinaten ergibt sich:

$$x_0 (c - t_z y_1) = a - t_x y_1 \qquad (7)$$

$$y_0 (c - t_z y_1) = b - t_y y_1 \qquad (8)$$

Für mehr als eine Messung ergibt sich ein Gleichungssystem der Form *Mx = v* mit einem zu bestimmenden Vektor x, einer Matrix *M* und einem Vektor *v* (siehe Gleichung 9), das sich für mindestens drei Bild-Korrespondenzen als Stützstellen durch z.B. eine Singular Value Decomposition (Singulärwertzerlegung der Matrix) oder ein Least-Square-Verfahren lösen lässt:

$$\begin{bmatrix} x_0 c - a \\ y_0 c - b \\ \vdots \end{bmatrix} = \begin{bmatrix} -y_1 & 0 & y_1 x_0 \\ 0 & -y_1 & y_1 y_0 \\ & \vdots & \end{bmatrix} * \begin{bmatrix} t_x \\ t_y \\ t_z \end{bmatrix} . \qquad (9)$$

Die Herleitung der Back- und Side-Plane-Homographien erfolgt analog und ergibt:

$$\begin{bmatrix} x_0 c - a \\ y_0 c - b \\ \vdots \end{bmatrix} = \begin{bmatrix} -x_1 & 0 & x_1 x_0 \\ 0 & -x_1 & x_1 y_0 \\ & \vdots & \end{bmatrix} \begin{bmatrix} t_x \\ t_y \\ t_z \end{bmatrix} \qquad (10)$$

$$bzw. \begin{bmatrix} x_0 c - a \\ y_0 c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}. \qquad (11)$$

Um größere, aus mehreren Zellen bestehende Objekte zu segmentieren, lassen sich in einem weiteren Schritt benachbarte Zellen zusammenfassen, indem die Rückprojektionsfehler $\sum x_{t0}^i - H_j x_{t1}^i$ bzw. $\sum x_{t0}^j - H_i x_{t1}^j$ über Stützstellen (siehe unten Punkt 1.: RANSAC) der benachbarten Segmente j und *i* und deren Homographien berechnet werden. Zwei benachbarte Cluster werden zusammengefasst, falls $\sum x_{t0}^i - H_j x_{t1}^i$ kleiner $\sum x_{t0}^i - H_i x_{t1}^i$ ist oder z.B. der auf die prädizierte Flusslänge normierte Rückprojektionsfehler unter einer einstellbaren Schwelle liegt. Insbesondere können zwei benachbarte Cluster zusammengefasst werden, falls $\sum x_{t0}^i -$ kleiner $\sum x_{t0}^i - H_i x_{t1}^i$ ist und die beiden Rückprojektionsfehler $\sum x_{t0}^i - H_j x_{t1}^i$ und $\sum x_{t0}^i - H_i x_{t1}^i$ eine auf die Flusslänge normierte Schwelle unterschreiten. Alternativ lassen sich Rückprojektionsfehler als Potentiale in einem Graph verwenden und eine globale Lösung berechnen. Die Kompaktheit der Cluster lässt sich hierbei über die Kantenpotentiale im Graphen bestimmen.

Wurden die Segmente zusammengefasst, werden die Homographien neu berechnet und die Punkt-Korrespondenzen den Clustern mit geringstem Rückprojektionsfehler zugeordnet. Betrachtet man nur direkt angrenzende Cluster, lassen sich sehr kompakte Objekte generieren. Überschreitet der minimale Fehler eine einstellbare Schwelle, werden den Korrespondenzen neue (Cluster-/Objekt-) IDs zugewiesen, um teilverdeckte Objekte oder Objekte mit leicht unterschiedlicher TTC erkennen zu können. Durch die Einstellung der Schwelle kann die Auflösung (leicht) unterschiedlicher Objekte angepasst werden.

Die Rückprojektionsfehler lassen sich mit einem Bias versehen, der Kosten für zusammenhängende Bereiche reduziert oder einem Bias, der die Kosten für einen ID-Wechsel erhöht, falls Punkt-Korrespondenzen über eine längere Zeit dieselbe ID-Zugehörigkeit hatten.

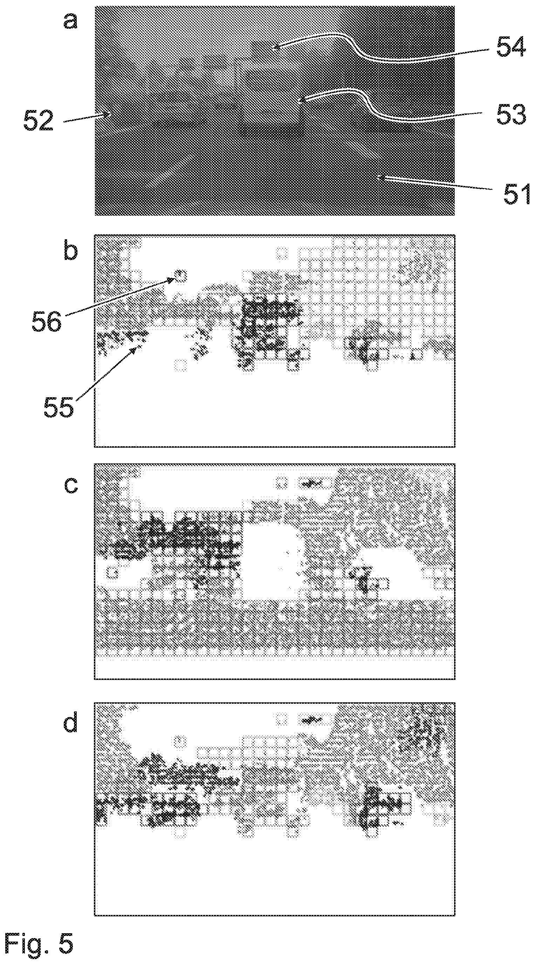

Fig. 5 zeigt ein Beispiel einer Szenensegmentierung:

Fig. 5a zeigt ein Bild, das von einer Fahrzeugkamera aufgenommen wurde, die im Inneren des Fahrzeugs angeordnet ist und die vorausliegende Umgebung durch die Windschutzscheibe erfasst. Zu sehen ist eine dreispurige Fahrbahn (51), z.B. eine Autobahn. Die Fahrspuren sind durch entsprechende Fahrspurmarkierungen getrennt. Auf allen drei Fahrspuren fahren Fahrzeuge. Das auf der eigenen Fahrspur vorausfahrende Fahrzeug (53) verdeckt möglicherweise weitere auf der eigenen Fahrspur befindliche vorausfahrende Fahrzeuge. Links der dreispurigen Fahrbahn befindet sich eine bauliche erhabene Begrenzung (52) zur Gegenfahrbahn. Rechts der dreispurigen Fahrbahn (51) befindet sich ein Rand- bzw. Standstreifen, der nach rechts von einer Leitplanke begrenzt wird, hinter der sich ein Waldgebiet anschließt. In einiger Entfernung vor dem eigenen Fahrzeug sind Schilderbrücken (54) zu erkennen, von denen eine die dreispurige Fahrbahn (51) überspannt.

Analog dem anhand von Fig. 4 beschriebenen Verfahren, kann diese Szene segmentiert werden. In Fig. 5b bis 5d sind Zellen (56) zu erkennen. In den Zellen sind Punktkorrespondenzen (55) dargestellt. Die Zuordnung einer Zelle (56) zu einem Segment ist über die Farbe des Zellrahmens bzw. der Punktkorrespondenzen (55) dargestellt.

Fig. 5b zeigt den roten Kanal des segmentierten Bildes,

Fig. 5c den grünen Kanal und Fig. 5d den blauen Kanal.

Unterschiedliche Segmente wurden mit unterschiedlichen Farben versehen. Ein Segment, welches im Original grün ist, erstreckt sich über die untersten fünf bis sechs Zeilen (in Fig. 5b und 5d entsprechend weiss dargestellt und ohne Zellrahmen). Dieses Segment entspricht der Bodenebene, also der Oberfläche der Fahrbahn (51), auf der das eigene Auto fährt.

Ein weiteres Segment ist in der Mitte des Bildes zu erkennen, im Original ist es pink. Daher weist es in Fig. 5b hohe Rotwerte auf, in Fig. 5d schwächere Blauwerte und in Fig. 5c keine Grünwerte. Dieses Segment entspricht der Rückwandebene des auf der eigenen Fahrspur vorausfahrenden (Transporter-) Fahrzeugs (53).

Das gezeigte Segmentierungsergebnis wurde ohne Vorwissen über die Szene in nur drei Iterationsschritten ermittelt. Das zeigt die enorme Schnelligkeit und Leistungsfähigkeit einer Ausführungsform der Erfindung durch zeitliche Integration.

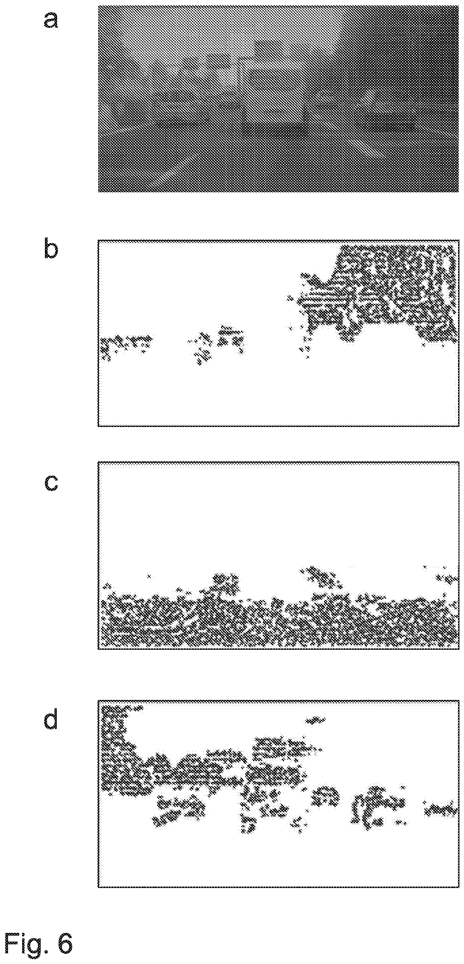

Fig. 6 zeigt eine Ermittlung der Orientierung von Ebenen in der bereits bei Fig. 5 beschriebenen Szene. Fig. 6a zeigt zur Orientierung nochmals die Umgebungssituation gemäß Fig. 5a.

Sämtliche Korrespondenzen, die einer Seitenwandebene zugeordnet zeigt Fig. 6b. Die Korrespondenzen am linken Rand wurden einer rechten Seitenwandebene zugeordnet, was zutreffend ist, da dort im Bild die rechte Seite der baulichen Begrenzung (52) zur Gegenfahrbahn befindlich ist. Die Korrespondenzen in der rechten Bildhälfte wurden linken Seitenwandebenen zugeordnet, was ebenfalls zutreffend ist, da dort die "linke Seite" der Fahrbahnrandbebauung bzw. -bepflanzung im Bild befindlich ist. Fig. 6c zeigt, welche Korrespondenzen einer Bodenebene zugeordnet werden, was zutreffend ist, da dort im Bild die Oberfläche der Fahrbahn (51) zu sehen ist.

Fig. 6d zeigt, welche Korrespondenzen einer Rückwandebene zugeordnet werden. Das ist weitestgehend zutreffend. Aus dieser Ermittlung alleine können unterschiedliche Rückwandebenen noch nicht hinreichend unterschieden werden, z.B. die von dem auf derselben Fahrspur vorausfahrenden Lieferwagen (53) von den im Bild darüber angeordneten Schildern der Schilderbrücke (54). Dieser Darstellung können aber bereits wichtige Hinweise entnommen werden, wo erhabene Objekte in der Umgebung des Fahrzeugs auftreten.

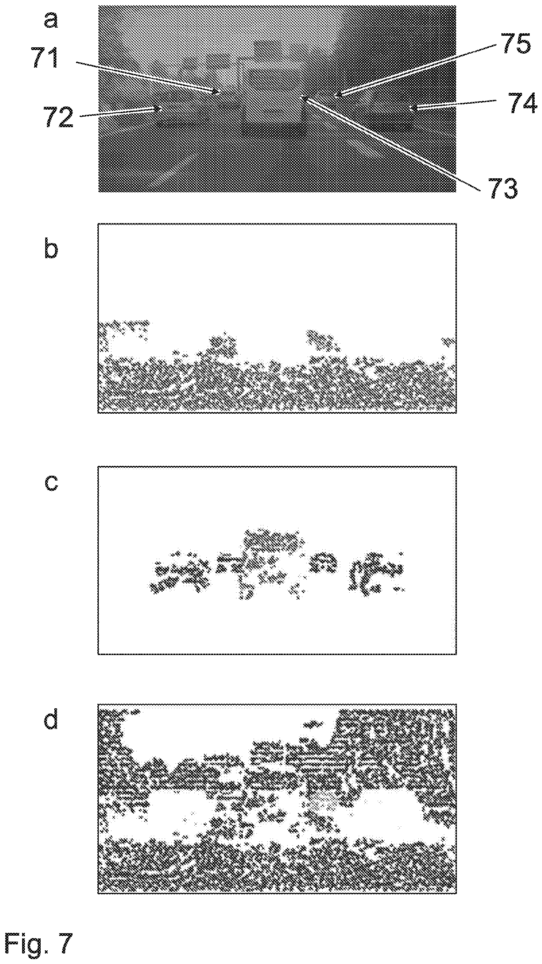

Wie in Fig. 7 veranschaulicht wird, kann zur Erkennung dynamischer Objekte die inverse TTC $(t_x, t_y, t_z)$ verwendet werden. Fig. 7a zeigt wiederum das Bild der Fahrzeugsituation (identisch mit Fig. 6a). Das auf der eigenen Fahrspur vorausfahrende Fahrzeug (73) ist ein Lieferwagen. Auf der linken Spur fahren zwei Fahrzeuge (71 und 72) und auf der rechten Spur zwei weitere Fahrzeuge (74 und 75).

Fig. 7b zeigt Korrespondenzen, die wiederum der Bodenebene entsprechen (im Original violett) und als einzige einen Rotanteil aufweisen.

Fig. 7c zeigt Korrespondenzen, die bewegten Objekten zugeordnet werden. Diese sind im Original grün, wenn sie sich vom eigenen Fahrzeug entfernen (also schneller fahren) bzw. türkis, wenn sie langsamer fahren.

Fig. 7d zeigt Korrespondenzen mit Blauanteil, also solche, die der Bodenebene entsprechen (vgl. Fig. 7b), bewegte Objekte, die sich dem eigenen Fahrzeug nähern (vgl. Fig. 7c) und solche, die statischen erhabenen Objekten entsprechen, diese sind nur in Fig. 7d dargestellt, wie z.B. Waldbereiche links und rechts der Autobahn und die Schilderbrücken. Aus Fig. 7c und 7d gemeinsam, ist zu erkennen, dass sich das Fahrzeug auf der eigenen Fahrspur (73) nähert. Dasselbe gilt für das vordere Fahrzeug auf der rechten Fahrspur (75). Dagegen entfernen sich die übrigen Fahrzeuge (71, 72 und 74).

Der Bereich, der im Bild dem Himmel entspricht, führt mangels Struktur im Bild zu keinen Korrespondenzen (weiß in Fig. 7b bis 7d).

Wird die Eigenrotation in den Korrespondenzen vor der Berechnung der Homographie berücksichtigt, bzw. wird die Eigenrotation in der Rotationsmatrix R berücksichtigt, lassen sich überholende Fahrzeuge aufgrund Ihrer negativen $t_z$ Komponente erkennen bzw. ausscherende oder in einer Kurve fahrende Fahrzeuge durch eine laterale $t_x$ Komponente ungleich Null erkennen. Werden die dynamischen Segmente über ihre Homographien prädiziert (siehe unten "Verdichtung des optischen Flusses basierend auf Homographien"), kann über die Zeit eine dynamische Karte aufgebaut werden.

Betrachtet man Gleichung 3, erkennt man, dass Segmente mit einer inversen TTC gleich Null die Rotationsmatrix beschreiben und man kann sie durch Berechnung einer Homographie mit vollen Freiheitsgrad (Gleichung 2) aus Segmenten mit $t/d$ gleich Null bestimmen. Geht man davon aus, dass sich die translatorische Komponenten in der Nähe des Epipols nicht bemerkbar machen, kann man die Pitch- und Gierrate auch bestimmen, indem die Koordinaten des Epipols $(x, , y_e)$ durch die Homographie statischer Segmente prädiziert werden und der $atan((x_{e0} - x_{e1})/f)$ bzw. $atan((y_{e0} - y_{e1})/f)$ mit der auf einen Pixel bezogenen Brennweite $f$ berechnet wird. Als Epipol bezeichnet man den Bildpunkt in einem ersten Kamerabild, an dem das Zentrum der Kamera zu einem zweiten Zeitpunkt abgebildet wird. Während einer Geradeausfahrt entspricht z.B. der Fluchtpunkt dem Epipol.

Wird für jedes Cluster eine Homographie mit allen Freiheitsgraden berechnet, können diese auch zur Rekonstruktion der 3D-Umgebung verwendet werden, indem anstelle der gemessenen Position $x_{t0}$, die prädizierte Position $H * x_{t1}$ zur Triangulation verwendet wird. Dies reduziert nicht nur den Einfluss von Messfehlern, sondern ermöglicht es auch Objekte nahe des Epipols zu rekonstruieren.

Im Folgenden wird ein Ausführungsbeispiel zur Verdichtung des optischen Flusses basierend auf Homographien beschrieben.

Ist die Segmentierung zum Zeitpunkt t-1 bekannt, kann sie sowohl zur Prädiktion der Objekte als auch zur Generierung eines dichten Flussfeldes verwendet werden. Signaturbasierte Flussverfahren erzeugen Signaturen und versuchen diese in aufeinanderfolgenden Frames eindeutig zuzuordnen. Meist werden die Signaturen aus einem Patch (Bildausschnitt bzw. Bildbereich) definierter Größe berechnet. Verändern sich jedoch Größe und Form eines Patches, ist eine Korrespondenzfindung mit einem festen Template (Vorlage, Muster, gemeint ist z.B. ein Bildausschnitt eines Bildes der Bildfolge, der einem Objekt entspricht - beispielsweise ein Fahrzeug-Template) nicht mehr möglich. Wenn man sich z.B. einer Back-Plane annähert, verändert sich die Größe eines Patches.Oder wenn man sich über eine einer Ground-Plane oder parallel zu einer Side-Plane bewegt, verändern sich sowohl Größe als auch Form eines Patches, siehe Fig. 1 und 2). Ist die Segmentierung zum Zeitpunkt t-1 vorhanden, können die Homographien über bereits gefunden Flussvektoren neu berechnet und dazu verwendet werden die Position und Form bereits etablierter Korrespondenzen von t-1 auf t-0 zu prädizieren.

Alternativ lässt sich der aktuelle Frame zum Zeitpunkt t-0 auf den Zeitpunkt t-1 transformieren, um Skalen- und Formänderungen zu kompensieren.

Wird eine Back-Plane-Homographie aus den Bild-Korrespondenzen auf einem Fahrzeugheck bzw. einer Fahrzeugfront berechnet, lässt sie sich diese ebenfalls zur zeitlichen Prädiktion verwenden. Eine Homographie beschreibt die Bewegung eines Punktes von t-1 nach t-0. Ist die Bounding-Box eines Fahrzeuges zum Zeitpunkt t-1 bekannt, lässt sie sich auf den Zeitpunkt t-0 prädizieren. Wird die Homographie über einen RANSAC(RAndom SAmple Consensus) berechnet, ergibt sich zudem eine deutlich größere Robustheit gegenüber lokalen Intensitätsänderungen und somit eine robuste Schätzung der Skalenänderung. Bei RANSAC-Verfahren wird üblicherweise bei jeder Iteration eine minimale Anzahl an zufällig ausgewählten Korrespondenzen verwendet, um eine Hypothese zu bilden. Für jedes korrespondierende Merkmal wird anschließend ein Wert berechnet, der beschreibt, ob das korrespondierende Merkmal die Hypothese unterstützt. Wenn die Hypothese eine hinreichende Unterstützung durch die korrespondierenden Merkmale erreicht, können die nicht-unterstützenden korrespondierende Merkmale als Ausreißer verworfen werden. Andernfalls wird erneut eine minimale Anzahl an Korrespondenzen zufällig ausgewählt. So ist es zum Beispiel einem Template basierten Tracker nicht möglich, ein Fahrzeug in aufeinander folgenden Frames zu korrelieren, das sich durch die Aktivierung der Bremslichter unterscheidet.

Folgende Ausgestaltungsformen bzw. -aspekte sind vorteilhaft und können einzeln oder in Kombination vorgesehen werden:

1. Extrahiere in aufeinander folgenden Frames Bild-Korrespondenzen auf der zu validierenden Detektion.
2. Berechne aus den Bild-Korrespondenzen die Back-/Ground- und Side-Plane-Homographien unter Verwendung der Gleichungen 9, 10 und 11.
3. Bestimme die Homographie mit dem kleinsten Rückprojektionsfehler.
4. Es handelt sich um ein erhabenes Objekt, falls die Rückprojektionsfehler der Back- und Side-Plane-Homographie geringer sind als der Fehler der Ground-Plane-Homographie.
5. Prädiziere, für ein bildbasiertes Tracking, die Boundig Box des letzten Frames mittels der Back-Plane-Homographie auf den aktuellen Frame.

## Patentansprüche

1.  Verfahren zur Detektion und Validierung von Objekten aus einer Folge von Bildern einer monokularen Fahrzeugkamera umfassend die Schritte:

   a) Aufnahme einer Folge von Bildern mit der monokularen Fahrzeugkamera
   b) Detektion eines potentiellen Kollisionsobjekts in mindestens einem Bild,
   c) Ermittlung von korrespondierenden Merkmalen in zwei aufeinander folgenden Bildern im Bereich des detektierten potentiellen Kollisionsobjekts,
   d) Berechnung von Homographien für die ermittelten korrespondierenden Merkmale zur Zuordnung dieser korrespondierenden Merkmale zu einer Ebene im Raum,
   e) Zuordnung einer Mehrzahl ermittelter korrespondierender Merkmale zu jeweils einer Ebene im Raum, wobei als mögliche Raumebenen vorgegeben sind: eine Bodenebene senkrecht zur y-Achse, eine Rückwandebene senkrecht zur z-Achse und eine Seitenwandebene senkrecht zur x-Achse, wobei sich die z-Achse in longitudinaler Richtung des Fahrzeugs erstreckt, die y-Achse in horizontaler Richtung und die x-Achse in vertikaler Richtung,
   f) Zuordnung zu der Ebene im Raum, die für die ermittelten korrespondierenden Merkmale den kleinsten Rückprojektionsfehler ergibt, wobei der Rückprojektionsfehler den Unterschied an zwischen der gemessenen Korrespondenz eines Merkmals in zwei aufeinanderfolgenden Bildern und dem aus der berechneten Homographie prädizierten Korrespondenz des Merkmals angibt, und
   g) Validierung eines Objekts als potentielles Kollisionsobjekt, falls die Ebene, der die Mehrzahl ermittelter korrespondierender Merkmale zugeordnet worden ist, einer Rückwand- oder einer Seitenwandebene entspricht, und die Rückprojektionsfehler der Rückwandebenen- und Seitenwandebenen-Homographie geringer sind als der Fehler der Bodenebenen-Homographie, was anzeigt, dass das validierte potentielle Kollisionsobjekt einem erhabenen Objekt entspricht.

2. Verfahren nach Anspruch 1, wobei die Validierung von potentiellen Kollisionsobjekten für den fraglichen Bildbereich vorgenommen wird, falls die Rückprojektionsfehler der Rückwandebenen- und der Seitenwandebenen-Homographie geringer sind als der Fehler der Bodenebenen-Homographie.

3. Verfahren nach einem der vorhergehenden Ansprüche, wobei die mindestens eine Rückwandebene berechnet wird nach

$$
\begin{bmatrix} x_0 c - a \\ y_0 c - b \\ \vdots \end{bmatrix} = \begin{bmatrix} -x_1 & 0 & x_1 x_0 \\ 0 & -x_1 & x_1 y_0 \\ & \vdots & \end{bmatrix} \begin{bmatrix} t_x \\ t_y \\ t_z \end{bmatrix}
$$

wobei a, b, c Konstanten sind, $x_0$, $y_0$, $x_1$, $y_1$ Korrespondenzen im ersten Bild (Index 0) und zweiten Bild (Index 1) und $t_x$, $t_y$, $t_z$, die Komponenten des Vektors t/d sind. t beschreibt die Translation der Fahrzeugkamera und d die Entfernung zu einer Ebene.

4. Verfahren nach einem der vorhergehenden Ansprüche, wobei die mindestens eine Bodenebene berechnet wird nach

$$
\begin{bmatrix} x_0 c - a \\ y_0 c - b \\ \vdots \end{bmatrix} = \begin{bmatrix} -y_1 & 0 & y_1 x_0 \\ 0 & -y_1 & y_1 y_0 \\ & \vdots & \end{bmatrix} * \begin{bmatrix} t_x \\ t_y \\ t_z \end{bmatrix}
$$

5. Verfahren nach einem der vorhergehenden Ansprüche, wobei die mindestens eine Seitenwandebene berechnet wird nach

$$
\begin{bmatrix} x_0 c - a \\ y_0 c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}
$$

6. Verfahren nach einem der vorhergehenden Ansprüche, wobei ein detektiertes Objekt im Verlauf der Bilderfolge bildbasiert getrackt wird.

7. Verfahren nach Anspruch 6, wobei das detektierte Objekt unter Verwendung einer Bounding Box getrackt wird.

8. Verfahren nach Anspruch 7, wobei die Bounding Box der abgebildeten Front-/Rückseite des detektierten Objekts entspricht.

9. Verfahren nach Anspruch 6, 7 oder 8, wobei die Bounding Box eines vorausgegangenen Bildes mittels der Rückwandebenen- Homographie auf das aktuelle Bild prädiziert wird.

10. Verfahren nach einem der vorhergehenden Ansprüche, wobei die potentiellen Kollisionsobjekte andere Fahrzeuge sind.

11. Vorrichtung zur Detektion und Validierung von Objekten aus einer Folge von Bildern einer monokularen Fahrzeugkamera umfassend:
ein Kamerasteuergerät, welches dazu ausgebildet ist,

a) eine Folge von Bildern mit der monokularen Fahrzeugkamera aufzunehmen;
und eine Auswerteelektronik, welche dazu ausgebildet ist,
b) ein potentielles Kollisionsobjekt in mindestens einem Bild zu detektieren,
c) korrespondierende Merkmale in zwei aufeinander folgenden Bildern im Bereich des detektierten potentiellen Kollisionsobjekts zu ermitteln,
d) Homographien für die ermittelten korrespondierenden Merkmale zur Zuordnung dieser korrespondierenden Merkmale zu einer Ebene im Raum zu berechnen,

e) eine Mehrzahl von ermittelten korrespondierenden Merkmalen zu einer Ebene im Raum zuzuordnen, wobei als mögliche Raumebenen vorgegeben sind: eine Bodenebene senkrecht zur y-Achse, einer Rückwandebene senkrecht zur z-Achse oder einer Seitenwandebene senkrecht zur x-Achse, wobei sich die z-Achse in longitudinaler Richtung des Fahrzeugs erstreckt, die y-Achse in horizontaler Richtung und die x-Achse in vertikaler Richtung,

f) zu der Ebene im Raum zuzuordnen, die für die ermittelten korrespondierenden Merkmale den kleinsten Rückprojektionsfehler ergibt, wobei der Rückprojektionsfehler den Unterschied an zwischen der gemessenen Korrespondenz eines Merkmals in zwei aufeinanderfolgenden Bildern und dem aus der berechneten Homographie prädizierten Korrespondenz des Merkmals angibt, und

g) ein Objekt als potentielles Kollisionsobjekt zu validieren, falls die Ebene, der die Mehrzahl ermittelter korrespondierender Merkmale zugeordnet worden ist, einer Rückwand- oder einer Seitenwandebene entspricht, und die Rückprojektionsfehler der Rückwandebenen- und Seitenwandebenen-Homographie geringer sind als der Fehler der Bodenebenen-Homographie, was anzeigt, dass das validierte potentielle Kollisionsobjekt einem erhabenen Objekt entspricht.

**Claims**

1. Method for detecting and validating objects from a sequence of images from a monocular vehicle camera, comprising the steps of:

   a) recording a sequence of images using the monocular vehicle camera,

   b) detecting a potential collision object in at least one image,

   c) ascertaining corresponding features in two consecutive images in the region of the detected potential collision object,

   d) calculating homographies for the ascertained corresponding features for assigning these corresponding features to a plane in space,

   e) assigning a plurality of ascertained corresponding features to in each case one plane in space, wherein possible spatial planes which are specified are: a bottom plane perpendicular to the y-axis, a rear wall plane perpendicular to the z-axis and a side wall plane perpendicular to the x-axis, with the z-axis extending in the longitudinal direction of the vehicle, the y-axis extending in the horizontal direction and the x-axis extending in the vertical direction,

   f) assigning them to that plane in space which results in the smallest back-projection error for the ascertained corresponding features, wherein the back-projection error indicates the difference between the measured correspondence of a feature in two consecutive images and the correspondence of the feature predicted from the calculated homography, and

   g) validating an object as a potential collision object if the plane to which the plurality of ascertained corresponding features are assigned corresponds to a rear wall plane or a side wall plane, and the back-projection errors of the rear wall plane homography and side wall plane homography are smaller than the error of the bottom plane homography, which indicates that the validated potential collision object corresponds to a raised object.

2. Method according to Claim 1, wherein the validation of potential collision objects for the image region in question is performed if the back-projection errors of the rear wall plane homography and the side wall plane homography are smaller than the error of the bottom plane homography.

3. Method according to either of the preceding claims, wherein the at least one rear wall plane is calculated according to

$$\begin{bmatrix} x_0 c - a \\ y_0 c - b \\ \vdots \end{bmatrix} = \begin{bmatrix} -x_1 & 0 & x_1 x_0 \\ 0 & -x_1 & x_1 y_0 \\ & \vdots & \end{bmatrix} \begin{bmatrix} t_x \\ t_y \\ t_z \end{bmatrix}$$

where a, b, c are constants, $x_0$, $y_0$, $x_1$, $y_1$ are correspondences in the first image (index 0) and second image (index 1), and $t_x$, $t_y$, $t_z$ are the components of the vector tld; $t$ describes the translation of the vehicle camera and d the distance from a plane.

4. Method according to any of the preceding claims, wherein the at least one bottom plane is calculated according to

$$\begin{bmatrix} x_0c - a \\ y_0c - b \\ \vdots \end{bmatrix} = \begin{bmatrix} -y_1 & 0 & y_1x_0 \\ 0 & -y_1 & y_1y_0 \\ & \vdots & \end{bmatrix} * \begin{bmatrix} t_x \\ t_y \\ t_z \end{bmatrix}$$

5. Method according to any of the preceding claims, wherein the at least one side wall plane is calculated according to

$$\begin{bmatrix} x_0c - a \\ y_0c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}$$

6. Method according to any of the preceding claims, wherein a detected object is tracked in an image-based manner over the course of the image sequence.

7. Method according to Claim 6, wherein the detected object is tracked using a bounding box.

8. Method according to Claim 7, wherein the bounding box corresponds to the imaged front/rear side of the detected object.

9. Method according to Claim 6, 7 or 8, wherein the rear wall plane homography is used to predict the bounding box of a preceding image in the current image.

10. Method according to any of the preceding claims, wherein the potential collision objects are other vehicles.

11. Apparatus for detecting and validating objects from a sequence of images from a monocular vehicle camera, comprising:
a camera controller, which is configured for

    a) recording a sequence of images using the monocular vehicle camera,
    and an evaluation electronic system, which is configured for
    b) detecting a potential collision object in at least one image,
    c) ascertaining corresponding features in two consecutive images in the region of the detected potential collision object,
    d) calculating homographies for the ascertained corresponding features for assigning these corresponding features to a plane in space,
    e) assigning a plurality of ascertained corresponding features to a plane in space, wherein possible spatial planes which are specified are: a bottom plane perpendicular to the y-axis, a rear wall plane perpendicular to the z-axis or a side wall plane perpendicular to the x-axis, with the z-axis extending in the longitudinal direction of the vehicle, the y-axis extending in the horizontal direction and the x-axis extending in the vertical direction,
    f) assigning them to that plane in space which results in the smallest back-projection error for the ascertained corresponding features, wherein the back-projection error indicates the difference between the measured correspondence of a feature in two consecutive images and the correspondence of the feature predicted from the calculated homography, and
    g) validating an object as a potential collision object if the plane to which the plurality of ascertained corresponding features are assigned corresponds to a rear wall plane or a side wall plane, and the back-projection errors of the rear wall plane homography and side wall plane homography are smaller than the error of the bottom plane homography, which indicates that the validated potential collision object corresponds to a raised object.

## Revendications

1. Procédé de détection et de validation d'objets à partir d'une séquence d'images d'une caméra de véhicule monoculaire, comprenant les étapes suivantes

    a) la prise d'une suite d'images avec la caméra monoculaire de véhicule,
    b) la détection d'un objet de collision potentiel dans au moins une image,
    c) la détermination de caractéristiques correspondantes dans deux images successives dans la zone de l'objet de collision potentiel détecté,

d) le calcul d'homographies pour les caractéristiques correspondantes déterminées pour l'affectation de ces caractéristiques correspondantes à un plan dans l'espace,

e) l'affectation d'une pluralité de caractéristiques correspondantes déterminées à un plan respectif dans l'espace, dans lequel sont prédéfinis comme plans possibles de l'espace - un plan de sol perpendiculaire à l'axe y, un plan de paroi arrière perpendiculaire à l'axe z et un plan de paroi latérale perpendiculaire à l'axe x, l'axe z s'étendant dans la direction longitudinale du véhicule, l'axe y dans la direction horizontale et l'axe x dans la direction verticale,

f) l'affectation au plan dans l'espace qui fournit la plus petite erreur de rétroprojection pour les caractéristiques correspondantes déterminées, l'erreur de rétroprojection indiquant la différence entre la correspondance mesurée d'une caractéristique dans deux images successives et la correspondance, prédite à partir de l'homographie calculée, de la caractéristique ; et

g) la validation d'un objet en tant qu'objet de collision potentiel, si le plan auquel la majorité des caractéristiques correspondantes déterminées ont été affectées correspond à un plan de paroi arrière ou à un plan de paroi latérale, et si les erreurs de rétroprojection de l'homographie de plan de paroi arrière et de plan de paroi latérale sont inférieures à l'erreur de l'homographie de plan de sol, cela indiquant que l'objet de collision potentiel validé correspond à un objet en relief.

2. Procédé selon la revendication 1, dans lequel la validation des objets de collision potentiels est effectuée pour la zone d'image en question dans le cas où les erreurs de rétroprojection de l'homographie de plan de paroi arrière et de plan de paroi latérale sont inférieures à l'erreur de l'homographie de plan de sol.

3. Procédé selon l'une quelconque des revendications précédentes, dans lequel ledit au moins un plan de paroi arrière est calculé conformément à

$$\begin{bmatrix} x_0 c - a \\ y_0 c - b \\ \vdots \end{bmatrix} = \begin{bmatrix} -x_1 & 0 & x_1 x_0 \\ 0 & -x_1 & x_1 y_0 \\ & \vdots & \end{bmatrix} \begin{bmatrix} t_x \\ t_y \\ t_z \end{bmatrix}$$

où a, b, c sont des constantes, $x_0$, $y_0$, xi, yi sont des correspondances dans la première image (indice 0) et la deuxième image (indice 1) et $t_x$, $t_y$, $t_z$ sont les composantes du vecteur tld, où t décrit la translation de la caméra de véhicule et d la distance par rapport à un plan.

4. Procédé selon l'une quelconque des revendications précédentes, dans lequel ledit au moins un plan de sol est calculé conformément à

$$\begin{bmatrix} x_0 c - a \\ y_0 c - b \\ \vdots \end{bmatrix} = \begin{bmatrix} -y_1 & 0 & y_1 x_0 \\ 0 & -y_1 & y_1 y_0 \\ & \vdots & \end{bmatrix} * \begin{bmatrix} t_x \\ t_y \\ t_z \end{bmatrix}$$

5. Procédé selon l'une quelconque des revendications précédentes, dans lequel ledit au moins un plan de paroi latérale est calculé conformément à

$$\begin{bmatrix} x_0 c - a \\ y_0 c - b \\ \vdots \end{bmatrix} = \begin{bmatrix} -1 & 0 & x_0 \\ 0 & -1 & y_0 \\ & \vdots & \end{bmatrix} \begin{bmatrix} t_x \\ t_y \\ t_z \end{bmatrix}$$

6. Procédé selon l'une quelconque des revendications précédentes, dans lequel un objet détecté est poursuivi à base d'images tout au long de la suite d'images.

7. Procédé selon la revendication 6, dans lequel l'objet détecté est poursuivi par utilisation d'une boîte de délimitation.

8. Procédé selon la revendication 7, dans lequel la boîte de délimitation correspond au côté avant/arrière reproduit de l'objet détecté.

9. Procédé selon la revendication 6, 7 ou 8, dans lequel la boîte de délimitation d'une image précédente est prédite sur l'image actuelle au moyen de l'homographie de plan de paroi arrière.

10. Procédé selon l'une quelconque des revendications précédentes, dans lequel les objets de collision potentiels sont d'autres véhicules.

11. Procédé de détection et de validation d'objets à partir d'une suite d'images d'une caméra de véhicule comprenant : un appareil de commande de caméra qui est conçu pour

   a) prendre une suite d'images avec la caméra monoculaire de véhicule, et une électronique d'évaluation qui est conçue pour

   b) détecter un objet de collision potentiel dans au moins une image,

   c) déterminer des caractéristiques correspondantes dans deux images successives dans la zone de l'objet de collision potentiel détecté,

   d) calcul d'homographies pour les caractéristiques correspondantes déterminées pour l'affectation de ces caractéristiques correspondantes à un plan dans l'espace,

   e) affecter une pluralité de caractéristiques correspondantes déterminées à un plan respectif dans l'espace, dans lequel sont prédéfinis comme plans possibles de l'espace - un plan de sol perpendiculaire à l'axe y, un plan de paroi arrière perpendiculaire à l'axe z et un plan de paroi latérale perpendiculaire à l'axe x, l'axe z s'étendant dans la direction longitudinale du véhicule, l'axe y dans la direction horizontale et l'axe x dans la direction verticale,

   f) affecter au plan dans l'espace qui fournit la plus petite erreur de rétroprojection pour les caractéristiques correspondantes déterminées, l'erreur de rétroprojection indiquant la différence entre la correspondance mesurée d'une caractéristique dans deux images successives et la correspondance, prédite à partir de l'homographie calculée, de la caractéristique ; et

   g) valider un objet en tant qu'objet de collision potentiel, si le plan auquel la majorité des caractéristiques correspondantes déterminées ont été affectées correspond à un plan de paroi arrière ou à un plan de paroi latérale, et si les erreurs de rétroprojection de l'homographie de plan de paroi arrière et de plan de paroi latérale sont inférieures à l'erreur de l'homographie de plan de sol, cela indiquant que l'objet de collision potentiel validé correspond à un objet en relief.

Fig. 1

Fig. 2

a

b

21

20

d1

23

20

d3

Fig. 3

A B C D ...

1
2
3
:

Fig. 4

Fig. 5

a

b

c

d

Fig. 6

Fig. 7

a

81

b

82    82

83    84

c

85
86

87    88    81

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8098889 B2
- US 20140161323 A1
- EP 2993654 A1
- US 7046822 B1
- US 20150332114 A1
- US 2015086080 A1

**In der Beschreibung aufgeführte Nicht-Patentliteratur**

- **M.I.A. LOURAKIS et al.** Detecting Planes In An Uncalibrated Image Pair. *Proceedings of the 13th British Machine Vision Conference,* 02. September 2002, ISBN 978-1-901725-19-3, 57.1-57.10
- **HARTLEY, R. ; ZISSERMAN, A.** Tutorial: Multiple View Geometry. *CVPR,* Juni 1999, https://de.scribd.com/document/96810936/Hartley-Tut-4up